# EUROPEAN PATENT SPECIFICATION

(11) **EP 4 107 462 B1**
(45) Date of publication and mention of the grant of the patent: **07.08.2024**
(21) Application number: 21706128.2
(22) Date of filing: 27.01.2021
(51) Int. Cl.: F28D 7/16, F28F 9/02, F28G 9/00, F28G 15/08, C08F 2/01

(54) **SYSTEMS FOR COOLING RECYCLED OFF-GAS IN LOW-DENSITY POLYETHYLENE PRODUCTION**
SYSTEME ZUM KÜHLEN DES RÜCKGEFÜHRTEN ABGASES BEI DER PRODUKTION VON POLYETHYLEN NIEDRIGER DICHTE
SYSTÈMES DE REFROIDISSEMENT DE GAZ DE DÉGAGEMENT RECYCLÉ DANS LA PRODUCTION DE POLYÉTHYLÈNE BASSE DENSITÉ

(30) Priority: 21.02.2020 US 202062979695 P
(43) Date of publication of application: 28.12.2022
(73) Proprietor: ExxonMobil Chemical Patents Inc., Baytown, TX 77520 (US)
(72) Inventor: DEWITTE, Cindy, Puurs-sint-amands (BE)
(74) Representative: ExxonMobil Chemical Europe LLC
(86) International application number: PCT/US2021/015164
(87) International publication number: WO 2021/167761

(56) References cited:
- EP-A1- 3 572 752
- WO-A1-2014/074981
- CN-A- 106 323 051
- CN-A- 109 612 306
- RU-C1- 2 700 311

## Description

### FIELD

Embodiments of the present invention generally relate to heat exchanger cooling systems. More particularly, such embodiments relate to improved heat exchanger systems for cooling off-gas recycled to a high pressure low-density polyethylene reactor.

### BACKGROUND

In low-density polyethylene (LDPE) production, a high pressure recycle system cools the unreacted off-gas (containing ethylene) from a high pressure separator that is in fluid communication with the outlet of a high pressure LDPE reactor. The cooled gas is then fed to a secondary compressor and recycled to the LDPE reactor. This cooling operation has traditionally been performed using one or more double pipe heat exchangers in which unreacted off-gas flows through one pipe and cooling water flows through another pipe that surrounds the first pipe or vice versa. Heat is transferred from the off-gas to the cooling water, thereby cooling the off-gas.

One challenge of using double pipe heat exchangers in the recycle system is that such heat exchangers experience a high pressure drop. As a result, the secondary compressor needs to consume more power to increase the pressure of the unreacted off-gas being recycled to the LDPE reactor. Another drawback of using double pipe heat exchangers is that each heat exchanger is quite large and requires more space than desired within the manufacturing facility.

One alternative design of the high pressure recycle system has been the replacement of double pipe heat exchangers with shell and tube heat exchangers. Shell and tube heat exchangers include a shell, i.e., a large pressure vessel, with a bundle of tubes inside. Unreacted off-gas flows through the tubes and cooling water flows through the shell. Shell and tube heat exchangers advantageously experience less pressure drop and take up less space than double pipe heat exchangers because the tube bundle allows for a higher number of passes between the cooling water and the off-gas. EP 3 572 752 A1 discloses an example of shell and tube heat exchanger.

Despite these advantages of shell and tube heat exchangers, such heat exchangers have their own limitations. Since the tubes are contained within the shell of the heat exchanger and end at the tube sheet, the tubes are supported by being welded to the tube sheet. These welding points are potential leak sources and can result in gas leakage from the tubes to the shell. Thus, unreacted gas containing ethylene can undesirably accumulate in the shell of the heat exchanger, resulting in some of the ethylene not being recycled. Therefore, the cost of LDPE production can increase due to the gas leakage. It also creates a safety risk in the cooling system.

Yet another problem associated with the use of conventional shell and tube heat exchangers is that the tubes can become plugged by any wax that is entrained in the unreacted gas. This wax can form when low molecular weight polyethylene is no longer soluble in the unreacted gas solution due to a decrease in temperature. Fouled or plugged tubes can be difficult to clean since the tubes are located inside the shell of the heat exchanger. In addition, the tubes of conventional shell and tube heat exchangers are typically made of material that can undergo corrosion such as carbon steel and thus can begin to leak due to corrosion failure.

A need therefore exists for heat exchangers that are less likely to experience leakage and corrosion failure and thus have a longer lifetime. Heat exchangers that can be more easily cleaned are also highly desired.

### SUMMARY

Improved heat exchanger systems and processes that can be used to cool recycled off-gas in high pressure LDPE production are provided. In one or more embodiments, a system for exchanging heat between a first material and a second material as defined in claim 1 includes a shell for containing the first material therein, a plurality of tubes disposed within the shell for containing the second material therein, a tube sheet disposed at an end of the shell for restricting flow of the second material to the shell, and at least one collector conduit disposed exterior to the shell for receiving at least one end of the plurality of tubes, wherein at least one of the plurality of tubes extend through the tube sheet to the collector conduit. A cleaning tool is disposed within the collector conduit that includes a nozzle for spraying one of tubes with a fluid at a pressure up to 80 MPa during cleaning.

In one or more embodiments, processes for cooling a gas stream according to claims 8-15 are provided.

### BRIEF DESCRIPTION OF THE DRAWINGS

So that the manner in which the above recited features of the present invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.
FIG. 1 depicts a flow diagram of an illustrative high pressure low-density polyethylene (LDPE) production process, according to one or more embodiments described herein.
FIG. 2 depicts a flow diagram of an illustrative high pressure recycle system that can be used in the LDPE production process of FIG. 1.
FIG. 3A depicts a partial side plan view of an illustrative shell and tube heat exchanger that can be used in the high pressure recycle system of FIG. 2, according to one or more embodiments described herein.
FIG. 3B depicts a detailed view of a portion of the heat exchanger from FIG. 3A, according to one or more embodiments described herein.
FIG. 4A depicts a side plan view of the shell of the heat exchanger from FIG. 3A with baffles arranged inside the shell, according to one or more embodiments described herein
FIG. 4B depicts a cross-sectional view of the shell and baffles from FIG. 4A, according to one or more embodiments described herein.
FIG. 5 depicts a side view of an illustrative cleaning tool that can be used to clean the tubes of the heat exchanger depicted in FIG. 3A, according to one or more embodiments described herein.
FIG. 5B depicts a cross-sectional view of the cleaning tool of FIG. 5, according to one or more embodiments described herein.
FIG. 6 depicts a cross-sectional view of an illustrative collector conduit that can receive the ends of the tubes of the heat exchanger from FIG. 3A and that can contain the cleaning tool from FIG. 5, according to one or more embodiments described herein.

### DETAILED DESCRIPTION

It is to be understood that the following disclosure describes several exemplary embodiments for implementing different features, structures, and/or functions of the invention. Exemplary embodiments of components, arrangements, and configurations are described below to simplify the present disclosure; however, these exemplary embodiments are provided merely as examples and are not intended to limit the scope of the invention. Additionally, the present disclosure may repeat reference numerals and/or letters in the various exemplary embodiments and across the Figures provided herein. This repetition is for the purpose of simplicity and clarity and does not in itself dictate a relationship between the various exemplary embodiments and/or configurations discussed in the Figures.

In the following discussion and in the claims, the terms "including" and "comprising" are used in an open-ended fashion, and thus should be interpreted to mean "including, but not limited to." The phrase "consisting essentially of' means that the described/claimed composition does not include any other components that will materially alter its properties by any more than 5% of that property, and in any case does not include any other component to a level greater than 3 mass%.

The term "or" is intended to encompass both exclusive and inclusive cases, i.e., "A or B" is intended to be synonymous with "at least one of A and B," unless otherwise expressly specified herein.

The indefinite articles "a" and "an" refer to both singular forms (i.e., "one") and plural referents (i.e., one or more) unless the context clearly dictates otherwise. For example, embodiments using "an olefin" include embodiments where one, two, or more olefins are used, unless specified to the contrary or the context clearly indicates that only one olefin is used.

The term "wt%" means percentage by weight, "vol%" means percentage by volume, "mol%" means percentage by mole, "ppm" means parts per million, and "ppm wt" and "wppm" are used interchangeably and mean parts per million on a weight basis. All concentrations herein, unless otherwise stated, are expressed on the basis of the total amount of the composition in question.

The term "α-olefin" refers to any linear or branched compound of carbon and hydrogen having at least one double bond between the α and β carbon atoms. For purposes of this specification and the claims appended thereto, when a polymer or copolymer is referred to as including an α -olefin, e.g., poly-α -olefin, the α-olefin present in such polymer or copolymer is the polymerized form of the α-olefin.

The term "polymer" refers to any two or more of the same or different repeating units/mer units or units. The term "homopolymer" refers to a polymer having units that are the same. The term "copolymer" refers to a polymer having two or more units that are different from each other, and includes terpolymers and the like. The term "terpolymer" refers to a polymer having three units that are different from each other. The term "different" as it refers to units indicates that the units differ from each other by at least one atom or are different isomerically. Likewise, the definition of polymer, as used herein, includes homopolymers, copolymers, and the like. By way of example, when a copolymer is said to have a "propylene" content of 10 wt% to 30 wt%, it is understood that the repeating unit/mer unit or simply unit in the copolymer is derived from propylene in the polymerization reaction and the derived units are present at 10 wt% to 30 wt%, based on a weight of the copolymer.

The term "in fluid communication" signifies that fluid can pass from a first component to a second component, either directly or via at least a third component. The term "inlet" refers to the point at which fluid enters a component, and the term "outlet" signifies the point at which fluid exits a component.

Nomenclature of elements and groups thereof used herein are pursuant to the Periodic Table used by the International Union of Pure and Applied Chemistry after 1988. An example of the Periodic Table is shown in the inner page of the front cover of Advanced Inorganic Chemistry, 6th Edition, by F. Albert Cotton et al. (John Wiley & Sons, Inc., 1999).

A detailed description will now be provided.

An improved shell and tube heat exchanger system is disclosed that can include one or more heat exchangers containing a plurality of tubes disposed within a shell or vessel. The shell and tube heat exchanger system can serve as a cooling recycle system in, for example, a high pressure low-density polyethylene (LDPE) production process. Unreacted gas from a LDPE reactor can flow through the tubes, and a cooling fluid can flow through the shell such that heat is exchanged between the unreacted gas and the cooling fluid. A tube sheet can be disposed at the ends of the shell for restricting flow of the unreacted gas from the tubes to the shell. One or more collection conduits can be positioned exterior to the shell of each heat exchanger for receiving ends of the tubes. At least a portion of the tubes uniquely extend through the tube sheet in the shell to a collection conduit outside the shell. Therefore, there is no need to support the tubes running through the shell by connection to the shell. Due to the absence of potential leak sources at connection points, gas is less likely to accumulate in the shell.

The inventive heat exchanger system also advantageously can include tubes consisting essentially of duplex stainless steel, which is substantially resistant to corrosion, resulting in even less gas leakage from the tubes to the shell. The heat exchanger system can further include a pair of longitudinal baffles disposed within the shell on opposite sides of the shell. Such baffles can be positioned near an inlet of the shell, near an outlet of the shell and/or at multiple locations along a length of the shell. They can direct the flow of the cooling fluid more toward the middle of the shell and closer to the tubes, providing for better heat transfer.

The heat exchanger system also includes a cleaning tool positioned inside each collection conduit for removing wax and any other contaminants that build up inside of the tubes. The cleaning tool includes a nozzle for spraying the wax, etc. with a fluid such as water at a pressure sufficient to flush the wax to, for example, a blow down drum. Since the tubes extend outside the shell to the collection conduit, they are more easily accessible to a worker in a LDPE production plant. Therefore, the worker can easily determine when a tube leaving the shell is plugged by feeling whether the tube is colder than usual. The cleaning tool can then be rotated to a position in which the nozzle is aligned with the end of the plugged tube to permit fluid to flow through the nozzle. After the cleaning process is completed, the cleaning tool can be rotated back to a position in which fluid is no longer allowed to flow through the nozzle.

### LDPE Production Process

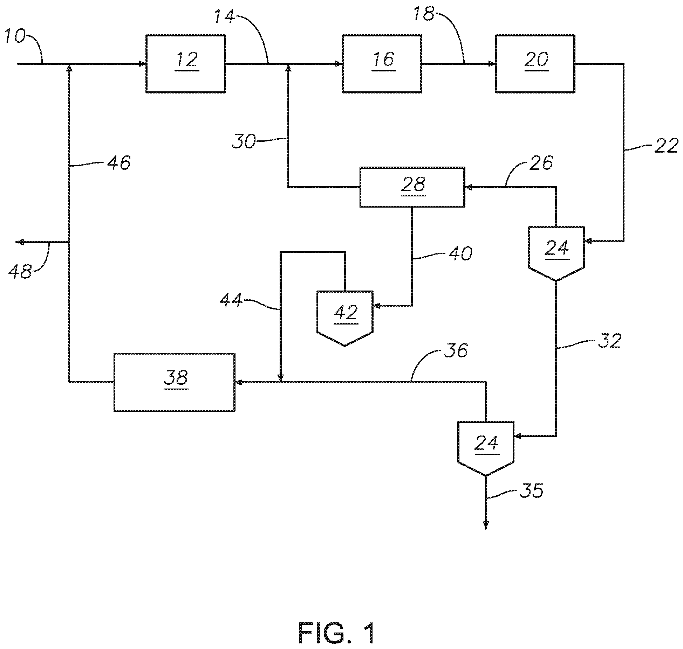

Turning to FIG. 1, a flow diagram of an exemplary high pressure LDPE production process is depicted that can employ the heat exchanger system provided herein. As shown, a feed stream **10** is first introduced to a primary compressor **12** to raise the pressure of the feed stream **10.** The feed stream **10** can include raw material typically employed in a polymerization process to produce LDPE. For example, the feed stream **10** can include ethylene or ethylene mixed with at least one other comonomer if it is desirable to produce polyethylene copolymers. Alternatively, the feed stream **10** could include ethylene, and at least one other comonomer could be introduced to a compressed feed stream **14** leaving primary compressor **12.**

Examples of suitable comonomers include: vinyl ethers such as vinyl methyl ether and vinyl ether; α-olefins such as propylene, 1-butene, 1-octene, and styrene; vinyl esters such as vinyl acetate, vinyl butyrate, and vinyl pivalate: haloolefins such as vinyl fluoride and vinylidene fluoride; acrylic esters such as methyl acrylate, ethyl acrylate, and methacrylates; other acrylic or methacrylic compounds such as acrylic acid, methacrylic acid, maleic acid, acrylonitrile, and acrylamide; and other compounds such as allyl alcohol, vinyl silanes, and other copolymerizable vinyl compounds. Two or more comonomers can be used, if desired. The α-olefin comonomer can be linear (e.g., linear C₃-C₂₀ α-olefins) or branched (e.g., α-olefins having one or more C₁-C₃ alkyl branches or an aryl group). Specific examples of α-olefins include C₃-C₁₂ α-olefins such as propylene; 1-butene; 3-methyl-1-butene; 3,3-dimethyl-1-butene; 1-pentene; 1-pentene with one or more methyl, ethyl, or propyl substituents; 1-hexene with one or more methyl, ethyl, or propyl substituents; 1-heptene with one or more methyl, ethyl, or propyl substituents; 1-octene with one or more methyl, ethyl or propyl substituents; 1-nonene with one or more methyl, ethyl or propyl substituents; ethyl, methyl, or dimethyl-substituted 1-decene; 1-dodecene; and styrene.

A compressed feed stream **14** that exits primary compressor **12** can be introduced to a secondary compressor **16** to further increase its pressure. A highly compressed feed stream **18** that exits secondary compressor **16** can then be introduced to a reactor **20** such as a tubular reactor or an autoclave reactor. The LDPE polymer or copolymer can be produced within reactor **20** using a high pressure and high temperature polymerization process. Various process variations that achieve safe and economical operating conditions are known in the art. By way of example, the polymerization process can be performed at a pressure of about 131 MPa to about 210 MPa and a temperature of about 148°C to about 270°C when a single autoclave reactor is used. It is to be understood that multiple reactors could be used instead.

The polymerization reaction can be enhanced by the injection of at least one modifier or chain transfer agent. The modifier can be injected upstream of the primary compressor, but it can alternatively be injected upstream of the secondary compressor or upstream of the reactor. Examples of suitable modifiers include isobutylene, propylene, n-butane, hexane, propane, 1-butene, and aldehydes such as acetaldehyde and propionaldehyde.

An effluent stream **22** containing LDPE polymer or copolymer and unreacted ethylene, comonomer, and/or modifier exits reactor **20.** This effluent stream **22** can be introduced to a high pressure separator **24** after undergoing a pressure drop in a valve. The high pressure separator **24** can split the effluent stream **22** into a polymer rich liquid phase **32** and an unreacted gas phase **26.** The polymer rich liquid phase **32** that exits the bottom of the high pressure separator **24** can be directed to a low pressure separator **34** in which the pressure is further reduced. A polymer-containing liquid stream **35** that exits the bottom of low pressure separator **34** can be sent to an extruder to pelletize the polymer if desired. An unreacted gas stream **36** that exits the low pressure separator **34** can be directed to a recycle purge compressor **38** to increase the pressure of stream **36** to that of feed stream **10.** A recycled gas stream **46** that exits the purge compressor **38** can then be introduced to feed stream **10.** A portion of the gas stream **46** exiting the purge compressor **38** can also be sent to purification via stream **48.**

The unreacted gas stream **26** that exits high pressure separator **24** can be introduced to a cooling recycle system **28,** which can include the shell and tube heat exchanger system disclosed herein. The unreacted gas stream **26** can enter the cooling recycle system **28** at a temperature of, e.g., about 100°C to about 300°C, preferably about 150°C to about 280°C, and more preferably about 200°C to about 260°C. A cooled unreacted gas stream **30** exits the recycle system **28** at a temperature of, e.g., about 15°C to about 80°C, preferably about 15°C to about 50°C, and more preferably about 15°C to about 30°C. The pressure drop across the entire cooling recycle system **28** can be as low as about 0.5 MPa to about 1.5 MPa, which is a significant improvement over a conventional recycle system using double pipe heat exchangers.

The cooled unreacted gas stream **30** can be recycled back to the compressed feed stream **14** to allow unreacted ethylene, comonomer, and/or modifier to be reintroduced to the secondary compressor **16,** which is in fluid communication with the LDPE reactor **20.** Wax entrained in the unreacted gas passing through cooling recycle system **28** can flow down to a blowdown drum **42** via stream **40.** Any gas that accumulates in the blowdown drum **42** can be directed to gas stream **36** via stream **44** for recycling.

### Heat Exchanger System

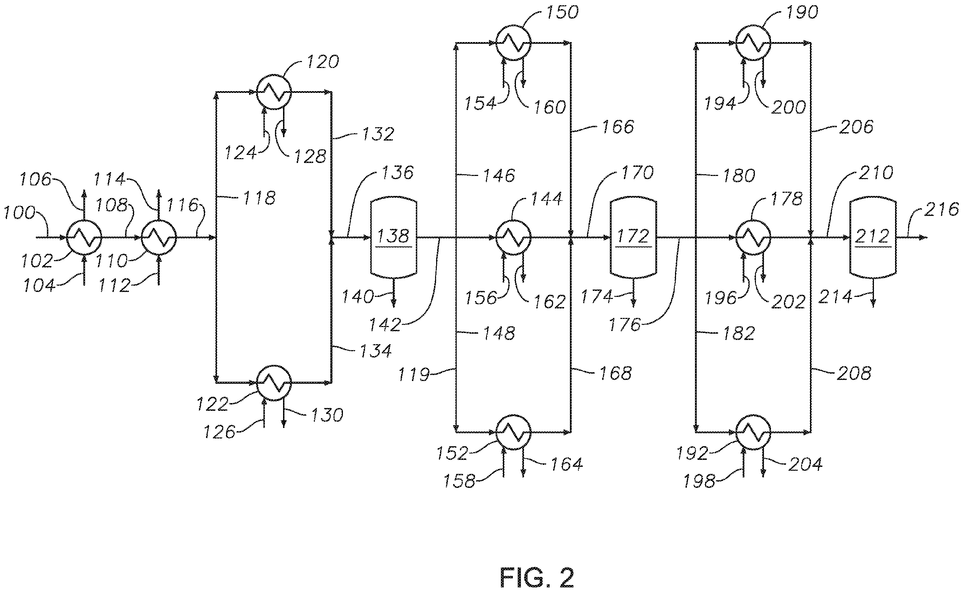

The heat exchanger system disclosed herein can serve as the cooling recycle system **28** of FIG. 1. A flow diagram of an illustrative heat exchanger system is shown in FIG. 2. A gas stream **100** (such as unreacted gas stream 26 from FIG. 1) can first be fed to one or more waste heat boilers **102** and **110** arranged in series to recuperate waste heat from the gas stream **100** and produce steam that can be used in other processes. Water **104** that is passed to waste heat boiler **102** can be converted to medium pressure steam **106** having a pressure of about 1 MPag to about 2 MPag. An outlet stream **108** that exits waste heat boiler **102** can be introduced to the inlet of waste heat boiler **110.** Water **112** that is passed to boiler **110** can be converted to low pressure steam **114** having a pressure of about 0.3 to about 0.5 MPag.

An outlet stream **116** that exits waste heat boiler **110** can be passed to sets of parallel shell and tube heat exchangers arranged in series. The first set can employ hot water as the cooling medium, the second set can employ cooling tower water as the cooling medium, and the third set can employ chilled water as the cooling medium. Gradual cooling of the unreacted gas in this manner results in more energy efficient operation of the cooling recycle system. One embodiment of these sets of parallel shell and tube heat exchangers is shown in FIG. 2. More specifically, the outlet stream **116** from waste heat boiler **110** can be split into a first stream **118** being introduced to a shell and tube heat exchanger **120** and a second stream **119** being introduced to a shell and tube heat exchanger **122.** Hot water as cold as practicable (e.g., when economics, etc. are considered), typically between about 40°C and about 60°C, can be passed into heat exchangers **120** and **122** via streams **124** and **126,** respectively, and can exit heat exchangers **120** and **122** via streams **128** and **130,** respectively. The outlet stream **132** that exits heat exchanger **120** and the outlet stream **134** that exits heat exchanger **122** can be combined into gas stream **136,** which can then be fed to a vapor-liquid separator **138** (also called a knock-out drum). The vapor-liquid separator **138** can remove liquids such as waxes entrained in the gas stream **136,** and such liquids can be removed from the bottom of vapor-liquid separator via stream **140.**

An outlet stream **142** that exits vapor-liquid separator **138** can then be separated into two additional streams **146** and **148** before being fed to a shell and tube heat exchanger **144.** Stream **146** can be introduced to a shell and tube heat exchanger **150,** and stream **148** can be introduced to a shell and tube heat exchanger **152.** Cooling tower water as cold as practicable depending on current weather conditions can be passed into heat exchangers **150, 144,** and **152** via streams **154, 156,** and **158,** respectively, and can exit heat exchangers **150, 144,** and **152** via streams **160, 162,** and **164,** respectively. For example, the cooling tower water temperature can vary depending on the climate of the country where the LDPE production process is located and on whether on what season it is (hotter in the summer and colder in the winter). By way of example, the cooling tower water could be between about 10°C and about 40°C. An outlet stream **166** that exits heat exchanger **150** and an outlet stream **168** that exits heat exchanger **152** can be introduced to gas stream **170** that exits heat exchanger **144.** This gas stream **170** can then be fed to a vapor-liquid separator **172.** The vapor-liquid separator **172** can remove liquids such as waxes entrained in the gas stream **170** via stream **174.**

An outlet stream **176** from vapor-liquid separator **172** can thereafter be divided into two additional streams **180** and **182** before being introduced to a shell and tube heat exchanger **178.** Stream **180** can be introduced to a shell and tube heat exchanger **190,** and stream **182** can be introduced to a shell and tube heat exchanger **192.** Chilled water as cold as practicable, typically between about 5°C and about 10°C can be passed into heat exchangers **190, 178,** and **192** via streams **194, 196,** and **198,** respectively, and can exit heat exchangers **190, 178,** and **192** via streams **200, 202,** and **204,** respectively. An outlet stream **206** that exits heat exchanger **190** and an outlet stream **208** that exits heat exchanger **192** can be introduced to a gas stream **210** that exits heat exchanger **178,** which can then be fed to a vapor-liquid separator **212.** The vapor-liquid separator **212** can remove liquids such as waxes entrained in the gas stream **210** via stream **214.** An outlet stream **216** that exits vapor-liquid separator can then be introduced to a compressor such as secondary compressor **16** from FIG. 1.

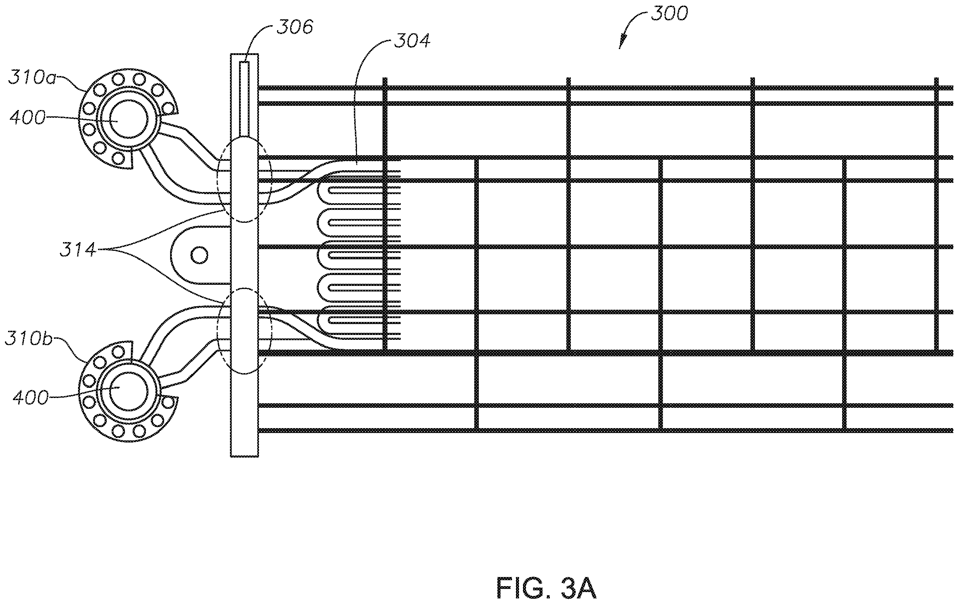

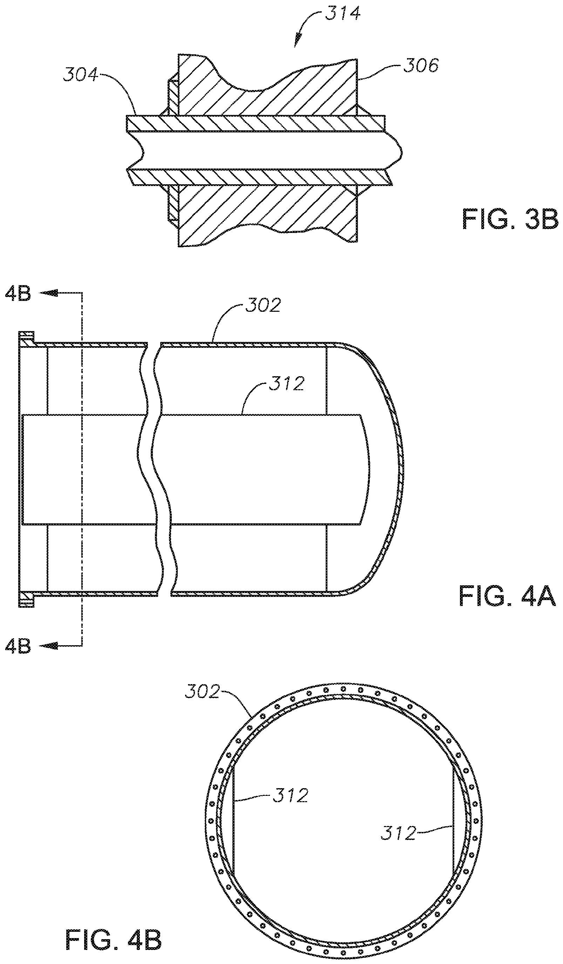

FIG. 3A depicts a side view of a portion of an improved heat exchanger **300** that can be employed as one or more of the heat exchangers shown in FIG. 2. Heat exchanger **300** can include a shell (shown later in FIG. 4A), i.e., a container or vessel, through which a first material can flow through the heat exchanger **300.** As shown, a bundle of tubes **304** can extend through the center of the heat exchanger **300,** and a second material can flow through these tubes **304.** Heat can be exchanged between the first and second materials. In one embodiment, the first material flowing through shell **302** can be or can include water or other heat transfer fluid, and the second material flowing through tubes **304** can be or can include the unreacted gas from a polyolefin production process. It is to be understood that the first material and the second material could be reversed with respect to their flow through heat exchanger **300.**

The tubes **304** can be made of any suitable material that is substantially resistant to corrosion and can withstand the desired operating conditions within the exchanger **300.** A particularly suitable material is duplex stainless steel. Duplex stainless steel has a two-phase microstructure that includes both grains of ferritic stainless steel and grains of austenitic stainless steel. Another suitable material that tubes **304** can be composed of is austenitic stainless steel such as SAE 316L grade stainless steel. The tubes **304** also can include both duplex stainless steel and austenitic stainless steel.

Still referring to FIG. 3A, a tube sheet **306** can be disposed laterally at one end of shell **302** to restrict flow of the second material from the tubes **304** to the shell **302.** The ends of tubes **304** can extend through the tube sheet **306** to input and output collection conduits **310a** and **310b.** The input collection conduit **310a** can serve to deliver the second material to a first or "input" end of each tube **304,** and the output collection conduit **310b** can serve to receive the second material from a second or "output" end of each tube **304,** or vice versa.

The tubes **304** can be configured with up to as many parallel flows and passes as one skilled in the art deems necessary. For example, the heat exchanger **300** can include up to twenty tubes **304** arranged in parallel with each tube making up to twelve passes to provide for relatively high cooling capacity. As used herein, each "pass" is equivalent to one "tube length", i.e., the length of the tube between the tube sheet **306** and the opposite end of the shell **302** of the heat exchanger **300.** Thus, each tube **304** can be arranged such that the material flowing through the tube **304** flows one tube length horizontally in a first direction (equivalent to one pass) and then flows one tube length horizontally in a second direction opposite to the first direction (equivalent to a second pass). This flow pattern can be repeated for up to twelve passes before the material within each tube **304** exits the heat exchanger **300.** Since the heat exchanger **300** can include up to twenty tubes **304,** the total number of tube lengths formed by the tubes **304** can be up to 240. It is to be understood that tubes **304** could be arranged in various other configurations, as is commonly known in the art.

FIG. 3B depicts an enlarged detailed view of a portion **314** of heat exchanger **300** to more clearly illustrate one of the tubes **304** extending through the tube sheet **306.** Because the ends of tubes **304** extend through the tube sheet **306,** there is no need to weld tubes **304** to the tube sheet **306.** Consequently, gas is less likely to leak from the tubes **304** and undesirably accumulate in the shell **302.**

FIG. 4A depicts a side plan view of the shell **302** of heat exchanger **300** from FIG. 3A and illustrates that heat exchanger **300** can also include one or more baffles **312** positioned longitudinally along the length of the shell **302.** FIG. 4B is a cross-section of shell **302** through the lines 4B-4B shown in FIG. 4A. It shows that baffles **312** can be positioned adjacent to opposite sides of the shell **302.** The baffles **312** can be arranged in this manner to direct flow in the shell **302** more toward the center and closer to the tubes **304.** It is to be recognized that other configurations of the baffles **312** are possible, depending on where direction of the flow through shell **302** is to be directed.

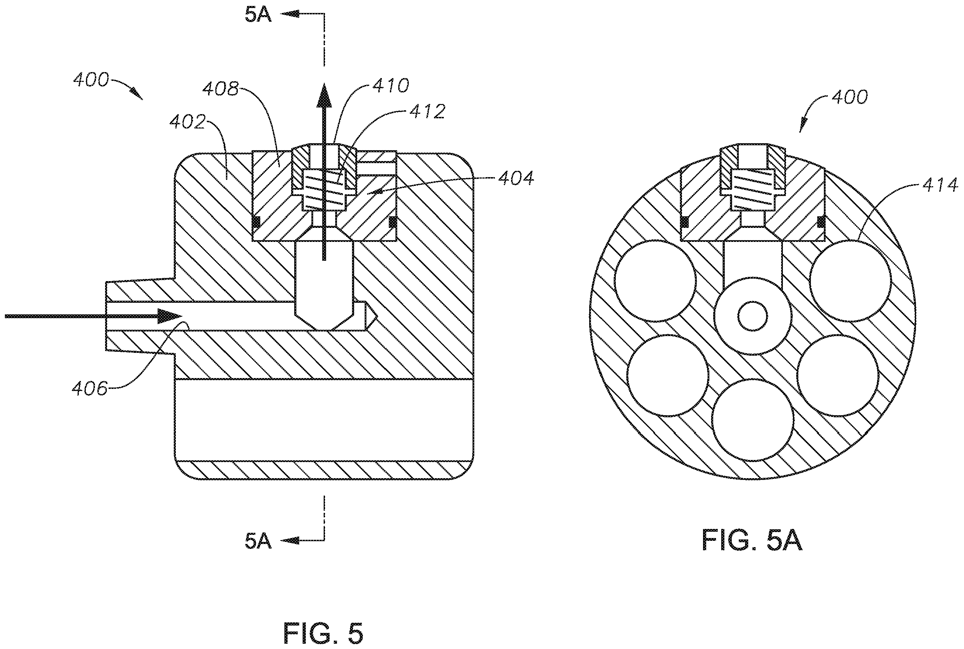

FIG. 5 depicts a side view of an illustrative cleaning tool **400** that can be used to clean the tubes of the heat exchanger **300** depicted in FIG. 3A, and FIG. 5A depicts a cross-section of the cleaning tool (viewed along the lines 5A-5A shown in FIG. 5). As shown in FIG. 5, a cleaning tool **400** can be used to remove contaminants such as wax from the tubes **304** of FIG. 3A. The cleaning tool **400** can include a housing **402** in which a nozzle **404** is located within. An opening or conduit **406** can be positioned within housing **402** for directing a fluid, such as water through the housing **402** to the nozzle **404.** The bold arrows in FIG. 5 show the direction of fluid (e.g., water) flow into and through the tool **400.** An alignment nose **408** can be positioned adjacent to the nozzle **404** for holding the nozzle **404** in place. The nozzle **404** can include a piston **410** and a spring **412** to regulate the flow of the fluid.

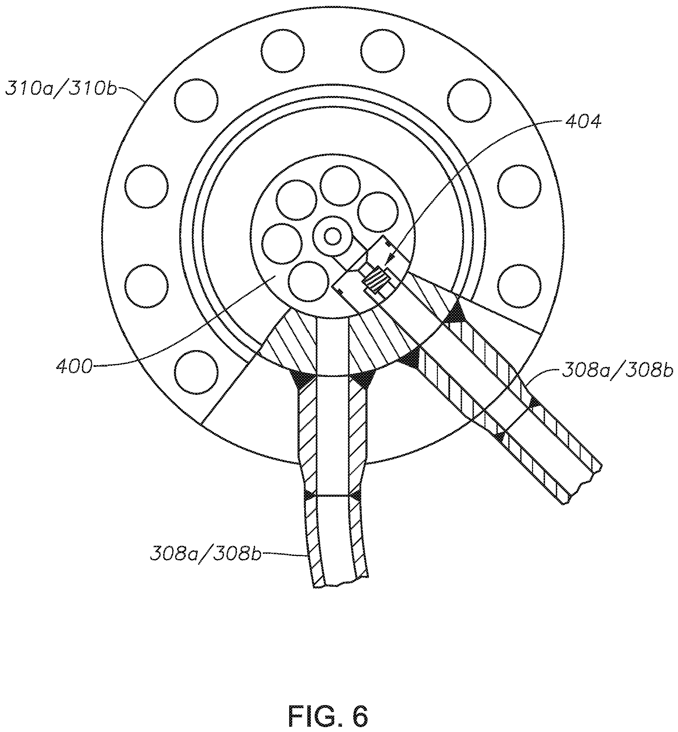

FIG. 5A, as noted, depicts a cross-section of the cleaning tool **400,** and in particular shows one or more openings or holes **414** can be drilled through the cleaning tool **400** to lighten its weight. The lower the weight of the cleaning tool **400,** the easier it is for an operator to manipulate moving the cleaning tool **400.** As shown in FIG. 6, the cleaning tool **400** can be positioned within inlet and outlet collection conduits **310a** and **310b.**

A worker can easily determine when one of the tubes **304** is plugged by feeling the exterior of the tube ends **308a** and **308b** leading to the collection conduits **310a** and **310b.** When one of the tube ends **308a** or **308b** is colder than usual, this indicates that the corresponding tube **304** is plugged.

The cleaning tool **400** can then be operated by rotating the tool **400** to a position in which the piston **410** is aligned with the tube **304** that needs cleaning. When the tool **400** is in this position, fluid, e.g., water, can be sprayed from the nozzle **404** at a pressure of up to about 80 MPa. The force of the fluid washes the contaminant from where it has built up in the tube **304.** To terminate the cleaning process, the cleaning tool **400** can be rotated back to its original position in which the nozzle is forced against the inner wall of the collection conduit **310a** or **310b** by the spring **412,** thereby restricting flow of fluid from the nozzle **404.**

The cleaning tool 400 can also be used to remove fouling from the tubes 304 in the same manner described above.

Certain embodiments and features have been described using a set of numerical upper limits and a set of numerical lower limits. It should be appreciated that ranges including the combination of any two values, *e.g*., the combination of any lower value with any upper value, the combination of any two lower values, and/or the combination of any two upper values are contemplated unless otherwise indicated. Certain lower limits, upper limits and ranges appear in one or more claims below. All numerical values are "about" or "approximately" the indicated value, and take into account experimental error and variations that would be expected, by a person having ordinary skill in the art.

## Claims

1. A system (300) for exchanging heat between a first material and a second material, comprising:
a shell (302) for containing the first material therein;
a plurality of tubes (304) disposed within the shell (302) for containing the second material therein,
a tube sheet (306) disposed at an end of the shell (302) for restricting flow of the second material to the shell (302); and
at least one collector conduit (310a, 310b) disposed exterior to the shell (302) for receiving at least one end of the plurality of tubes (304), wherein at least one of the plurality of tubes (304) extend through the tube sheet (306) to the collector conduit (310a, 310b),
**characterised in that** the system (300) further comprises a cleaning tool (400) disposed within the at least one collector conduit (310a, 310b) comprising a nozzle (404) for spraying one of the ends of the plurality of tubes (304) with a fluid during cleaning.

2. The heat exchanger system (300) of claim 1, wherein the at least one collector conduit (310a, 310b) comprises an input collector conduit (310a) and an output collector conduit (310b), wherein at least one input end of the tubes (304) are in fluid communication with the input collector conduit (310a) for receiving the second material from the input collector conduit (310a), and wherein at least one output end of the tubes (304) are in fluid communication with the output collector conduit (310b) for delivering the second material to the output collector conduit (310b).

3. The heat exchanger system (300) of claim 1 or claim 2, wherein the plurality of tubes (304) consists essentially of duplex stainless steel, austenitic stainless steel, or combinations thereof.

4. The heat exchanger system (300) of any one claims 1 to 3, further comprising a pair of longitudinal baffles (312) disposed within the shell (302) adjacent to opposite sides of the shell (302).

5. The heat exchanger system (300) of claim 4, wherein the pair of longitudinal baffles (312) is disposed near an inlet of the shell (302), near an outlet of the shell (302), or at multiple locations along a length of the shell (302).

6. The heat exchanger system (300) of any preceding claim, wherein the cleaning tool (400) is capable of being rotated to a first position in which the nozzle (404) is aligned with said one of the ends of the plurality of tubes (304) and the fluid is permitted to flow from the nozzle (404); and further wherein the cleaning tool (400) is capable of being rotated to a second position in which the nozzle (404) is not aligned with said one of the ends of the plurality of tubes (304) and the fluid is not permitted to flow from the nozzle (404).

7. The heat exchanger system (300) of any one of claims 1 to 6, wherein the plurality of tubes (304) comprises up to twenty tubes (304) arranged in parallel, and wherein each tube (304) is arranged to have up to twelve passes.

8. A process for cooling a gas stream comprising:
introducing a gas stream to one or more system (300) according to any preceding claim for cooling the gas stream, wherein the first material in the shell (302) is a cooling medium, and the second material in the plurality of tubes (304) is the gas stream.

9. The process of claim 8, wherein the gas stream is directed from a separator in fluid communication with an outlet of a polyethylene producing reactor to the one or more heat exchangers to form a cooled gas stream, wherein the cooled gas stream is recycled to a compressor in fluid communication with an inlet of the polyethylene producing reactor.

10. The process of claim 9, wherein the gas stream is introduced to one or more boilers arranged in series for producing steam before being introduced to the one or more heat exchangers.

11. The process of any one of claims 8-10, wherein the one or more heat exchangers further comprise the cleaning tool (400) disposed within the at least one collector conduit (310a, 310b), the cleaning tool (400) comprising the nozzle (404) for spraying one of the ends of the plurality of tubes (304) with a fluid at a pressure up to 80 MPa.

12. The process of any one of claims 8-11, further comprising introducing the gas stream to a first set of the one or more heat exchangers arranged in parallel for cooling the gas stream with hot water at a temperature of 40°C to 60°C.

13. The process of claim 12, further comprising: (a) introducing the gas stream exiting the first set of the one or more heat exchangers to a first vapor-liquid separator for removing liquid from the gas stream; (b) introducing the gas stream exiting the first vapor-liquid separator to a second set of the one or more heat exchangers arranged in parallel for cooling the gas stream with cooling tower water at a temperature of 10°C to 40°C; (c) introducing the gas stream exiting the second set of the one or more heat exchangers to a second vapor-liquid separator; (d) introducing the gas stream exiting the second vapor-liquid separator to a third set of the one or more heat exchangers arranged in parallel for cooling the gas stream with chilled water at a temperature of 5°C to 10°C; and (e) introducing the gas stream exiting the third set of the one or more heat exchangers to a third vapor-liquid separator.

14. A process for cleaning the heat exchanger system (300) of any one of claims 1 to 5, comprising rotating the cleaning tool (400) to a first position such that the nozzle (404) is aligned with said at least one of the ends of the plurality of tubes (304) to permit fluid to flow from the nozzle (404) at a pressure up to 80 MPa.

15. The process of claim 14, further comprising rotating the cleaning tool (400) to a second position such that the nozzle (404) is not aligned with said one of the ends of the plurality of tubes (304) and the fluid is not permitted to flow from the nozzle (404), thereby terminating the cleaning process.

## Patentansprüche

1. System (300) zum Wärmaustausch zwischen einem ersten Material und einem zweiten Material, mit:
einer Ummantelung (302) zur Aufnahme des ersten Materials darin,
einer Mehrzahl von Rohren (304), die zur Aufnahme des zweiten Materials darin in der Ummantelung angeordnet sind,
einer Rohrplatte (306), die an einem Ende der Ummantelung (302) angeordnet ist, um den Volumenstrom des zweiten Materials in die Ummantelung (302) einzuschränken, und
wenigstens einer Sammelleitung (310a, 310b), die außerhalb der Ummantelung (302) angeordnet ist, um wenigstens ein Ende der Mehrzahl von Rohren (304) aufzunehmen, wobei wenigstens eines aus der Mehrzahl von Rohren (304) durch die Rohrplatte (306) zur Sammelleitung (310a, 310b) verläuft,
**dadurch kennzeichnet, dass** das System (300) ferner ein Reinigungswerkzeug (400) aufweist, das in der wenigstens einen Sammelleitung (310a, 310b) angeordnet ist und eine Düse (404) aufweist, um eines der Enden der Mehrzahl von Rohren (304) während der Reinigung mit einem Fluid zu besprühen.

2. Wärmetauschersystem (300) nach Anspruch 1, wobei die wenigstens eine Sammelleitung (310a, 310b) eine Eingangssammelleitung (310a) und eine Ausgangssammelleitung (310b) aufweist, wobei wenigstens ein Eingangsende der Rohre (304) in Durchflussverbindung mit der Eingangsleitung (310a) ist, um das zweite Material aus der Eingangssammelleitung (310a) aufzunehmen, und wobei wenigstens ein Ausgangsende der Rohre (304) in Fließverbindung mit der Ausgangssammelleitung (310b) ist, um das zweite Material der Ausgangssammelleitung (310b) zuzuführen.

3. Wärmetauschersystem (300) nach Anspruch 1 oder Anspruch 2, wobei die Mehrzahl von Rohren (304) im Wesentlichen aus Duplex-Edelstahl, Austenitedelstahl oder Kombinationen daraus besteht.

4. Wärmetauschersystem (300) nach einem der Ansprüche 1 bis 3, ferner mit einem Paar von längsgerichteten Leitblechen (312), die innerhalb der Ummantelung (302) benachbart zu gegenüberliegenden Seiten der Ummantelung (302) angeordnet sind.

5. Wärmetauschersystem (300) nach Anspruch 4, wobei das Paar von längsgerichteten Leitblechen (312) nahe an einem Einlass der Ummantelung (302), nahe einem Auslass der Ummantelung (302) oder an mehreren Orten entlang einer Länge der Ummantelung (302) angeordnet ist.

6. Wärmetauschersystem (300) nach einem der vorhergehenden Ansprüche, wobei das Reinigungswerkzeug (400) in der Lage ist, in eine erste Position gedreht zu werden, in der die Düse (404) mit dem einen der Enden der Mehrzahl von Rohren (304) ausgerichtet ist und es dem Fluid ermöglicht ist, aus der Düse (404) zu fließen, und wobei das Reinigungswerkzeug (400) weiterhin in der Lage ist, in eine zweite Position gedreht zu werden, in der die Düse (404) nicht mit dem einen der Enden der Mehrzahl von Rohren (304) ausgerichtet ist und es dem Fluid nicht ermöglicht ist, aus der Düse (404) zu fließen.

7. Wärmetauschersystem (300) nach einem der Ansprüche 1 bis 6, wobei die Mehrzahl von Rohren (304) bis zu 20 Rohre (304) umfasst, die parallel angeordnet sind, und wobei jedes Rohr (304) so angeordnet ist, um bis zu zwölf Durchläufe zu haben.

8. Prozess zum Kühlen eines Gasstroms, bei dem:
ein Gasstrom in ein oder mehrere Systeme (300) nach einem der vorhergehenden Ansprüche zum Kühlen des Gasstroms eingeführt wird, wobei das erste Material in der Ummantelung (302) ein Kühlmedium ist und das zweite Material in der Mehrzahl von Rohren (304) den Gasstrom bildet.

9. Prozess nach Anspruch 8, wobei der Gasstrom von einem Separator in Fließverbindung mit einem Auslass eines Polyethylen erzeugenden Reaktors zu einem oder mehreren Wärmetauschern gelenkt wird, um einen gekühlten Gasstrom zu bilden, wobei der gekühlte Gasstrom zu einem Kompressor in Fließverbindung mit einem Einlass des Polyethylen erzeugenden Reaktors zurückgeführt wird.

10. Prozess nach Anspruch 9, wobei der Gasstrom in eine oder mehrere Boiler eingeführt wird, die in Reihe angeordnet sind, um Dampf zu erzeugen, bevor er in den einen oder die mehreren Wärmetauscher eingeführt wird.

11. Prozess nach einem der Ansprüche 8-10, wobei der eine oder die mehreren Wärmetauscher weiter ein Reinigungswerkzeug (400) aufweisen, das in der wenigstens einen Sammelleitung (310a, 310b) angeordnet ist, wobei das Reinigungswerkzeug (400) die Düse (404) aufweist, um eines der Enden der Mehrzahl von Rohren (304) mit einem Fluid bei einem Druck von bis zu 80 MPa zu besprühen.

12. Prozess nach einem der Ansprüche 8-11, bei dem weiterhin der Gasstrom in einen ersten Satz von dem einen oder mehreren Wärmetauschern eingeführt wird, die parallel geschaltet angeordnet sind, um den Gasstrom mit warmem Wasser mit einer Temperatur von 40°C bis 60°C zu kühlen.

13. Prozess nach Anspruch 12, bei dem weiter (a) der aus dem ersten Satz des einen oder der mehreren Wärmetauscher austretende Gasstrom in einen ersten Dampf-Flüssigkeits-Separator eingeführt wird, um Flüssigkeit aus dem Gasstrom zu entfernen, (b) der aus dem ersten Dampf-Flüssigkeits-Separator austretende Gasstrom in einen zweiten Satz des einen oder mehreren Wärmetauscher eingeführt wird, die parallel angeordnet sind, um den Gasstrom mit Kühlwasser bei einer Temperatur von 10°C bis 40°C zu kühlen, (c) der aus dem zweiten Satz des einen oder der mehreren Wärmetauscher austretende Gasstrom in einen zweiten Dampf-Flüssigkeits-Separator eingeführt wird, (d) der aus dem zweiten Dampf-Flüssigkeits-Separator austretende Gasstrom in einen dritten Satz von dem einen oder den mehreren Wärmetauschern eingeführt wird, die parallel angeordnet sind, um den Gasstrom mit gekühltem Wasser mit einer Temperatur von 5°C bis 10°C zu kühlen, und (e) der aus dem dritten Satz des einen oder der mehreren Wärmetauscher austretende Gasstrom in einen dritten Dampf-Flüssigkeits-Separator eingeführt wird.

14. Prozess zum Reinigen des Wärmetauschersystems (300) nach einem der Ansprüche 1 bis 5, bei dem das Reinigungswerkzeug (400) in eine erste Position gedreht wird, so dass die Düse (404) mit dem wenigstens einen der Enden der Mehrzahl von Rohren (304) ausgerichtet ist, um Fluidfluss aus der Düse (404) bei einem Druck von bis zu 80 MPa zuzulassen.

15. Prozess nach Anspruch 14, bei dem weiter das Reinigungswerkzeug (400) in eine zweite Position gedreht wird, so dass die Düse (404) nicht mit dem einen der Enden der Mehrzahl von Rohren (304) ausgerichtet ist und Fluidfluss aus der Düse (404) nicht zugelassen wird, wodurch der Reinigungsprozess beendet ist.

## Revendications

1. Système (300) destiné à échanger de la chaleur entre un premier matériau et un deuxième matériau, comprenant :
une calandre (302) pour y contenir le premier matériau ;
une pluralité de tubes (304) disposés à l'intérieur de la calandre (302) pour y contenir le deuxième matériau ;
une plaque tubulaire (306) disposée à une extrémité de la calandre (302) pour limiter l'écoulement du deuxième matériau jusqu'à la calandre (302) ; et
au moins un conduit collecteur (310a, 310b) disposé à l'extérieur de la calandre (302) pour recevoir au moins une extrémité de la pluralité de tubes (304), au moins un tube de la pluralité de tubes (304) s'étendant à travers la plaque tubulaire (306) jusqu'au conduit collecteur (310a, 310b),
**caractérisé en ce que** le système (300) comprend en outre un outil de nettoyage (400) disposé à l'intérieur de l'au moins un conduit collecteur (310a, 310b) comprenant une buse (404) pour pulvériser sur une extrémité donnée parmi les extrémités de la pluralité de tubes (304) un fluide pendant le nettoyage.

2. Système échangeur de chaleur (300) selon la revendication 1, dans lequel l'au moins un conduit collecteur (310a, 310b) comprend un conduit collecteur d'entrée (310a) et un conduit collecteur de sortie (310b), dans lequel au moins une extrémité d'entrée des tubes (304) est en communication fluidique avec le conduit collecteur d'entrée (310a) pour recevoir le deuxième matériau depuis le conduit collecteur d'entrée (310a), et dans lequel au moins une extrémité de sortie des tubes (304) est en communication fluidique avec le conduit collecteur de sortie (310b) pour délivrer le deuxième matériau au conduit collecteur de sortie (310b).

3. Système échangeur de chaleur (300) selon la revendication 1 ou la revendication 2, dans lequel la pluralité de tubes (304) consiste essentiellement en de l'acier inoxydable duplex, de l'acier inoxydable austénitique, ou une combinaison de ceux-ci.

4. Système échangeur de chaleur (300) selon l'une quelconque des revendications 1 à 3, comprenant en outre une paire de chicanes longitudinales (312) disposées à l'intérieur de la calandre (302) au voisinage de côtés opposés de la calandre (302).

5. Système échangeur de chaleur (300) selon la revendication 4, dans lequel la paire de chicanes longitudinales (312) est disposée près d'une entrée de la calandre (302), près d'une sortie de la calandre (302), ou à de multiples emplacements sur une longueur de la calandre (302).

6. Système échangeur de chaleur (300) selon une quelconque revendication précédente, dans lequel l'outil de nettoyage (400) peut être tourné jusqu'à une première position dans laquelle la buse (404) est alignée avec ladite extrémité donnée parmi les extrémités de la pluralité de tubes (304) et le fluide est autorisé à s'écouler depuis la buse (404) ; et dans lequel, en outre, l'outil de nettoyage (400) peut être tourné jusqu'à une deuxième position dans laquelle la buse (404) n'est pas alignée avec ladite extrémité donnée parmi les extrémités de la pluralité de tubes (304) et le fluide n'est pas autorisé à s'écouler depuis la buse (404).

7. Système échangeur de chaleur (300) selon l'une quelconque des revendications 1 à 6, dans lequel la pluralité de tubes (304) comprend jusqu'à vingt tubes (304) agencés en parallèle, et dans lequel chaque tube (304) est agencé pour avoir jusqu'à douze passages.

8. Procédé destiné à refroidir un courant de gaz comprenant :
l'introduction d'un courant de gaz dans un ou plusieurs systèmes (300) selon une quelconque revendication précédente pour refroidir le courant de gaz, dans lequel le premier matériau dans la calandre (302) est un fluide frigorigène, et le deuxième matériau dans la pluralité de tubes (304) est le courant de gaz.

9. Procédé selon la revendication 8, dans lequel le courant de gaz est acheminé depuis un séparateur en communication fluidique avec une sortie d'un réacteur produisant du polyéthylène jusqu'à l'échangeur ou aux échangeurs de chaleur pour former un courant de gaz refroidi, dans lequel le courant de gaz refroidi est recyclé dans un compresseur en communication fluidique avec une entrée du réacteur produisant du polyéthylène.

10. Procédé selon la revendication 9, dans lequel le courant de gaz est introduit dans une ou plusieurs chaudières agencées en série pour produire de la vapeur avant d'être introduit dans le ou les échangeurs de chaleur.

11. Procédé selon l'une quelconque des revendications 8 à 10, dans lequel le ou les échangeurs de chaleur comprennent en outre l'outil de nettoyage (400) disposé à l'intérieur de l'au moins un conduit collecteur (310a, 310b), l'outil de nettoyage (400) comprenant la buse (404) pour pulvériser sur une extrémité donnée parmi les extrémités de la pluralité de tubes (304) un fluide à une pression allant jusqu'à 80 MPa.

12. Procédé selon l'une quelconque des revendications 8 à 11, comprenant en outre l'introduction du courant de gaz dans un premier ensemble du ou des échangeurs de chaleur agencés en parallèle pour refroidir le courant de gaz avec de l'eau chaude à une température de 40 °C à 60 °C.

13. Procédé selon la revendication 12, comprenant en outre : (a) l'introduction du courant de gaz sortant du premier ensemble du ou des échangeurs de chaleur dans un premier séparateur vapeur-liquide pour retirer le liquide du courant de gaz ; (b) l'introduction du courant de gaz sortant du premier séparateur vapeur-liquide dans un deuxième ensemble du ou des échangeurs de chaleur agencés en parallèle pour refroidir le courant de gaz avec de l'eau de tour de réfrigération à une température de 10 °C à 40 °C ; (c) l'introduction du courant de gaz sortant du deuxième ensemble du ou des échangeurs de chaleur dans un deuxième séparateur vapeur-liquide ; (d) l'introduction du courant de gaz sortant du deuxième séparateur vapeur-liquide dans un troisième ensemble du ou des échangeurs de chaleur agencés en parallèle pour refroidir le courant de gaz avec de l'eau froide à une température de 5 °C à 10 °C ; et (e) l'introduction du courant de gaz sortant du troisième ensemble du ou des échangeurs de chaleur dans un troisième séparateur vapeur-liquide.

14. Procédé destiné à nettoyer le système échangeur de chaleur de l'une quelconque des revendications 1 à 5, comprenant la rotation de l'outil de nettoyage (400) jusqu'à une première position de telle sorte que la buse (404) soit alignée avec ladite au moins une des extrémités de la pluralité de tubes (304) pour permettre au fluide de s'écouler depuis la buse (404) à une pression allant jusqu'à 80 MPa.

15. Procédé selon la revendication 14, comprenant en outre la rotation de l'outil de nettoyage (400) jusqu'à une deuxième position de telle sorte que la buse (404) ne soit pas alignée avec ladite extrémité donnée parmi les extrémités de la pluralité de tubes (304) et le fluide ne soit pas autorisé à s'écouler depuis la buse (404), ce qui termine ainsi le procédé de nettoyage.
